# EUROPEAN PATENT SPECIFICATION

(11) **EP 2 021 287 B1**
(45) Date of publication and mention of the grant of the patent: **28.10.2009**
(21) Application number: 07735667.3
(22) Date of filing: 26.04.2007
(51) Int. Cl.: C02F 1/00, C02F 1/32, C02F 9/00

(54) **AUTONOMOUSLY FUNCTIONING WATER PURIFICATION DEVICE**
AUTONOM FUNKTIONIERENDE WASSERREINIGUNGSVORRICHTUNG
DISPOSITIF AUTONOME DE PURIFICATION D'EAU

(30) Priority: 01.05.2006 EP 06113340
(43) Date of publication of application: 11.02.2009
(73) Proprietor: Koninklijke Philips Electronics N.V., 5621 BA Eindhoven (NL)
(72) Inventor: BRUGGINK, Wilhelmus, H., M., NL-5656 AA Eindhoven (NL); PAWAR, Narendra, N., NL-5656 AA Eindhoven (NL)
(74) Representative: Uittenbogaard, Frank
(86) International application number: PCT/IB2007/051548
(87) International publication number: WO 2007/125490

(56) References cited:
- WO-A-02/42218
- WO-A-2005/019115
- DE-U1- 9 301 688
- US-A- 4 946 574
- US-A- 5 039 402
- US-A- 5 147 532
- US-A1- 2002 040 867
- US-A1- 2005 279 679
- US-B2- 6 863 827

## Description

The present invention in general relates to a water purification device comprising electrically driven water purification means, which device is to be connected to the public water supply system. Specifically, the invention relates to a water-purifier that autonomously dispenses a preset volume of purified water.

Water may contain many different kinds of contaminants, including for example, particulates, harmful chemicals and several types of microorganisms such as bacteria, parasites, cysts, and viruses. Any harmful contaminants must be removed from water before being suitable for safe consumption by human beings. The consequences associated with exposure to contaminated water may be very serious and even deadly, especially in less-developed countries. At the same time, however, in these countries there are several factors that may contribute to the contaminated water, including population densities, scarce water resources and/or lack of electricity.

Numerous different types of water purification systems therefore have been developed, based on one or more purification techniques, in order to make the water consumable by human beings. Well-known water purification techniques include distillation, boiling, chemical disinfection, reverse osmosis, filtration of the water, and treatment with ultraviolet (UV) radiation.

UV disinfection thus is a well-known means to prepare safe drinking water. Exposure of unpurified water to UV radiation will eliminate all living organisms in said water due to exposure of their DNA to the UV rays. The use of UV lamps, however, makes the need for electricity inevitable. UV water purifiers thus require continuous electrical power. In many areas of the world, where the electrical power is interrupted for certain periods of a day, or where there is no electricity available at all, UV water purifying systems are less suitable.

In US 6,863,827, an UV water-purifying device is described, comprising a plurality of water filters for filtration of water and an UV chamber for irradiating the water. The device includes a self-contained power supply that provides for solar power to an electrical battery that powers an electrical motor that is used for the pumping action in the purification process. This device is specifically suitable for use in remote areas, where no electricity is available.

In WO 2005/019.115, a self-filling, non-electric water filter device for treating contaminated drinking water is described, comprising a low-pressure filter for treating contaminated water and a storage housing for storing purified water treated by said water filter. The device further contains an automatic shut off valve for arresting the flow of purified drinking water into said storage housing once the capacity of the storage housing is reached, thus preventing an overflow situation. This device does not use UV radiation, and is only suitable for dispensing a specific amount of water, which specific amount of purified water is limited to the volume of the storage tank integrated within said device.

US 2002/040/867 A1 discloses a water treatment apparatus. The apparatus has a water treatment chamber. If water treatment chamber contains a sufficient amount of water, a valve isolates chamber from a water inlet. When the water in the chamber reaches a predetermined level, a float switch in the chamber sends a signal to a micro-controller which then sends a signal to the valve closing said valve. Once the valve is closed, the chamber and the float switch are isolated from the water inlet.

The application of water purification devices based on one or more of the known water purification techniques may be well developed in the household environment where both water pressure and electricity are generally readily available, and a good water quality can normally be attained. However in some countries, such as developing countries it sometimes happens that there is an interruption in the public supply of water and/ or electricity.

In situations where water supply from the water supply system is not available, the known water-purification devices continue to consume electric energy, e.g. by the continued operation of the electrically driven water purification means. This continued consumption of electricity only stops when the user switches the device off. However this has the disadvantage that the user will have to put on the device again each time the supply of water is resumed.

The object of the present invention is to provide a water purification device, which solves the above-mentioned drawback.

This object is achieved by the invention by providing an household water purification device, comprising electrically driven water purification means, an inlet for contaminated water, which inlet is in fluid communication with the water purification means and is connected to the water public supply system when the device is operational, an outlet for dispensing purified water, which outlet is in fluid communication with the water purification means, water flowing from the inlet to the outlet via the water purification means in operational conditions, wherein said device further comprises a closing unit for interrupting the flow of water, a sensor that senses the availability of public water supply, and control means that controls the closing unit and the water purification means, wherein the sensor comprises a pressure switch for sensing the pressure of the water in the inlet, wherein the electrically driven purification means are switched off by the control means when the supply of water from the public water supply system is temporarily disturbed, wherein the water purification means are re-activated as soon as water is available as it is sensed by the sensor.

The water purification device according to the present invention can provide the average household with an adequate daily supply of safe, potable water for cooking and drinking, even when there are interruptions in the supply of water. By sensing the availability of water supply the device will consume electric energy only when water is available from the public water system. When the supply of water is temporarily disturbed the control means switches off the electrically driven purification means, while the device turns to some kind of power-save mode. The water purification means then are re-activated as soon as water is available again as it is sensed by the sensor. This saves electric energy and allows the user not having to switch the device On and Off depending on the availability of water.

By turning to some kind of power save mode when there is an interruption in the supply of water, the life time of the electrically driven water purification means will increase. Such means are for example lamps or other radiation emitting devices, and therefore will have a longer life time if they are switched off whenever there is a temporary interruption in the water supply.

Another advantage of the water purification device according to the present invention is that if there is an interruption in the supply of electricity, the control means will promptly interrupt the flow of water by operating or activating the closing unit. This allows preventing any mixture of purified and non-purified water.

In a preferred embodiment, the device comprises means for monitoring the quantity of water that has been purified. Said means for monitoring the quantity of water that has been purified may for example comprise a flow counter, such as a rotary van type electro-mechanical counter. The cumulative data of the flow are stored in the artificial memory of the device and are preferably used for determining whether a preset amount of water has been purified. The data provided by the monitoring means may furthermore also be used for checking the expiry status of the filtering means, i.e. for checking whether the filtering means are still suitable for use or should be replaced.

According to another preferred embodiment, the control means operates the closing unit, such as a valve, if a preset amount of water has been purified. Once the preset amount of water has been purified and e.g. a storage vessel under the device is filled with purified water, the closing unit will interrupt the flow of water, while ensuring the availablity of the preset amount of purified water. Said preset amount of water preferably corresponds to the amount of water that has to be dispensed in order to fill e.g. a storage vessel containing some kind of emergency supply of water. This allows obtaining only smaller amounts of purified water available in case when there is limited water supply.

In a particularly preferred embodiment, the device further comprises input means for setting said preset amount of water to be purified. The user thus may set an amount of water that is to be purified, e.g. an amount corresponding to the size of a specific type of storage vessel that is used by the consumer in connection with the water-purifying device, and which is used as an emergency supply of purified water. These data may be saved in the appliance memory of the device. When water is available and the device is switched on said amount of water, as set by the consumer, is purified.

In a further preferred embodiment, the device comprises a rechargeable battery, which is electrically connected to a charging source. The charging source can be a connection to a power supply unit that is to be connected to the mains power grid or to solar cells when there is no other supply of electricity possible. The battery serves as a back-up system taking over the power supply, for example when there is a failure in the mains power grid, such that for a certain period of time water can still be purified. When mains power is available the battery will become charged again so that it can take over in case of the next mains power interruption. Alternatively, the device can also use the battery power supply while using mains power only for the purpose of charging the battery. Preferably the control means activate the closing unit as soon as there is both an interruption in the supply of electricity and the battery is empty.

The sensor for sensing the availability of contaminated water comprises a pressure switch. Such pressure switches typically are digital switches, which operate on the water pressure. As long as there is pressure due to water in the inlet of the device, the switch can be On or Off. The switch changes it's state the moment the pressure in the inlet drops below a certain value. The sensor alternatively may comprise a magnetic float system (i.e. a float incorporating a magnet) that activates a reed switch when the float position is at the same level as the reed switch due to the fact that the water inlet pressure drops below a certain value.

According to a preferred embodiment of the invention, the electrically driven water purification means comprise UV means for irradiating the water with UV radiation. UV radiation is a well-known means for providing safe and healthy drinking water. The water preferably is exposed to UV-C to such extent that all harmful microorganisms (bacteria, viruses and cysts) are inactivated according to levels that are considered safe for human consumption (NSF 55, class A, indicating that the water has been disinfected according to standard classification used in UV based water purification systems).

Preferably, the device further comprises filtration means for filtering the water, upstream from and in fluid communication with the UV means. By filtering the contaminated water before exposing the water to UV radiation, contaminants that potentially might impair adequate UV disinfection are eliminated. The filtration means may, for example, comprise one or more conventional filters, such as sediment filters to take out e.g. particles, activated carbon filters to improve aesthetic water properties by for example removing chlorine, and/or specific customized filter media to take out specific contaminants, such as lead, arsenic, nitrates, fluoride, etc.

According to the present invention, an autonomous water purifier thus is provided, which can provide the average household with an adequate daily supply of safe and clean drinking water, even in situations where there are frequent interruptions in the supply of both water and electricity. The device therefore is especially suited to be used in developing countries.

The autonomous functioning of the device according to the invention under different conditions (i.e. with respect to availability of water and electricity) is further explained below, referring to a preferred embodiment of the invention.

### 1. Water and mains electricity available:

The device is switched on using the on/off switch (mains switch).

The device confirms the availability of water (supply) using the pressure sensor.

The device subsequently checks:
■ The expiry of the filter. If the filter is expired then the device will not allow the user to dispense the water. The device will inform the user to change the display. Before the complete expiry of the filter the device will inform the user about the filter soon getting expired. If the filter has not yet expired the purification system will move to the next stage.
■ The effective UV dosage in the UV chamber. If the dose is above a certain value then the system is ready for use. In case the UV dose is not sufficient, information will be given to the user to e.g. replace the UV lamp.

The device goes in manual mode by default and will inform the user by using audio and visual signs that the device is ready for use.

By pressing a dispense button, purified water can be collected from the outlet of the device.

If the device is not in use for a certain period of time, the device switches to a power saving mode, i.e. the UV lamp is switched off. If a user then wants to dispense water after the device has gone into the power saving mode, the device will once again check the expiry of the filter and the effective UV dosage of the UV chamber as described above (third and fourth step above).

If the user turns the device into autonomous mode, then the user may set an amount of water to be purified. The device subsequently purifies and dispenses the preset amount of water and stops by interrupting the supply of water as soon as the preset amount has been purified. The device will again move to the step as described in the previous paragraph (power saving mode).

### 2. Water not available/ mains electricity available:

The device is switched on using the on/off switch (mains switch).

The device checks the availability of water (supply) using the pressure sensor. Since there is no water, the device turns to autonomous mode.

The user may set an amount of water to be purified after the water supply regains.

The device goes into wait mode (power saving mode).

Once the water supply regains, the pressure in the waterline increases, which (when reaching a certain treshold pressure) is sensed by the pressure switch which signal is passed to the control means, which switch the device on.

The device subsequently checks:
■ The expiry of the filter. If the filter is expired then the device will not allow the user to dispense the water. The device will inform the user to change the display. Before the complete expiry of the filter the device will inform the user about the filter soon getting expired. If the filter has not yet expired the purification system will move to the next stage.
■ The effective UV dosage in the UV chamber. If the dose is above a certain value then the system is ready for use. In case the UV dose is not sufficient, information will be given to the user to e.g. replace the UV lamp.

The device subsequently purifies and dispenses the preset amount of water and stops as soon as the preset amount has been purified.

If the water supply stops in between the device sets the remaining amount of water to be dispensed as the default setting and returns to the fouth step (power saving mode).

If after dispensing the device is not used for a certain time the device switches to a power saving mode, i.e. the UV lamp is switched off. If the user wants to dispense water after the device has switched to the power saving mode, the device will again start with the second step above (checking the availability of water) and proceed further.

### 3. Water available, no electricity/ No water and no electricity:

The battery back-up system will take over automatically, and the device will still function as described above under 1 and 2, respectively.

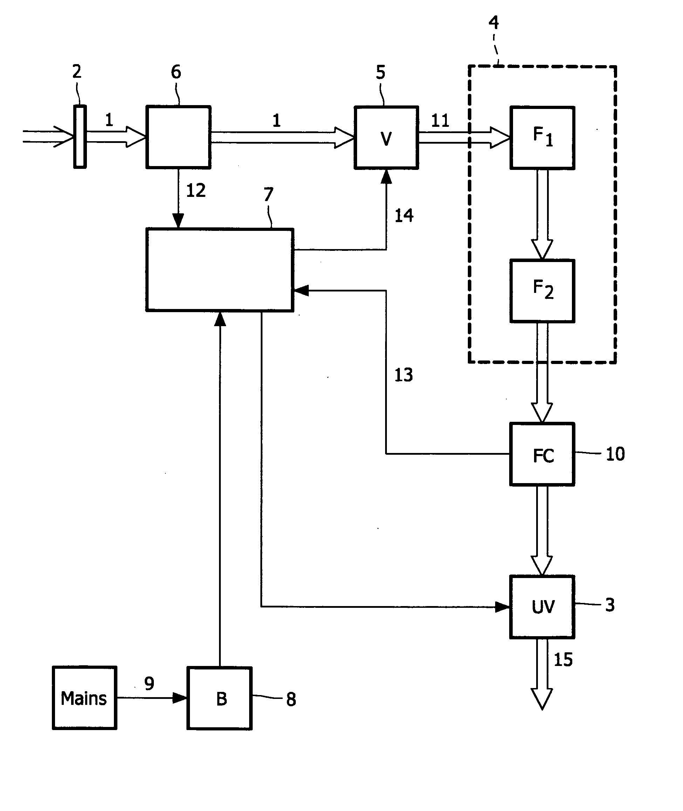

The invention is further illustrated in Figure 1, which is a schematic representation of the components of the device according to a preferred embodiment of the invention, showing the water flow and electronic linking of components.

Before operating it the device generally is connected to a tap, such as the water tap in the kitchen. This tap supplies contaminated water 1 to the device (i.e. fresh water that is not drinkable by human beings). The contaminated water 1 is introduced through inlet 2. Here it is assumed that the device according to the invention is mainly used in countries where water from the water supply system is not directly potable, at least not without purifying it. In such countries it also regularly happens that there is an interruption in the public supply of water and/ or electricity.

As schematically shown in Fig. 1, said inlet for contaminated water 2 is in fluid communication with a first filter F1, e.g. a sediment filter, and a second filter F2, e.g. an activated carbon filter F2 for removing e.g. chlorine, organic chemicals and lead from the water. Both filters may have been integrated in a customized filter block 4. The filters have been provided "upstream from", i.e. "before" in the direction of the water flow, an UV chamber 3, having an UV lamp for elimination of microorganisms from the water by exposure to UV light. Thus, the filters may remove any contaminants that might impair effective UV disinfection. As shown in Fig.1, valve 5, e.g. a solenoid valve, controls the supply of contaminated water 11 to the filters F1 and F2.

The water that exits the UV chamber 3 through outlet 15 is purified, in the sense that it is safe for humans to drink the water, and is ready for use. It should be understood that the device may comprise additional filters, e.g. to remove specific impurities that are unique to specific areas of the world, depending on where the device is used.

The autonomously functioning device according to the invention, as shown in Fig. 1, comprises a pressure switch 6, upstream from the valve 5, for determining the availability of contaminated water 1 from the water supply system. The pressure switch 6 is electrically coupled to control means 7, which in response to a signal 12 from the pressure switch 6 switches the UV lamp in the UV chamber 3 On or Off. Said control means 7 may e.g. include a printed circuit board upon which several electronic components, such as a micro-controller, and circuitry are mounted. A delay element may for example allow the UV lamp to warm up to full power in the UV chamber ensuring that the water is irradiated with a sufficient dosage of UV light. Preferably an additional valve is also arranged (not shown) between the electrically driven water purification means or UV chamber 3 and the outlet 15, which valve is also controlled by the control means 7.

The device of the invention preferably also comprises a flow counter 10 for monitoring the quantity of water that has been purified by the filters. The flow counter may e.g. be a rotary van type electro-mechanical counter. Such flow counter makes a number of turns depending upon the amount of flow and hence generates the electric pulses, which are calibrated to the flow through the device. The flow counter 10 is electrically coupled 13, 14 through control means 7 to valve 5 for stopping the supply of contaminated water if a preset amount of water has been purified by closing the valve 5. The cumulative data of the flow are stored in the artificial memory of the device and are used for determining whether a selected preset amount of water has been purified. Said preset amount of water may e.g. correspond to the volume of a storage vessel, which a user can dispose under the outlet 15 and is to be used as an emergency supply of purified water.

After having purified said preset amount of water, the device may e.g. issue a signal (sound, and/or visual such as a text message on a display) indicating that said present amount of water has been purified.

With the device of the invention it is possible to use different types of storage vessels having different volumes, as the user can easily adjust the amount of water that is to be purified. Preferably input means (not shown) are connected to the control means 7, allowing a user to preselect a required amount of water to be purified. The selected amount is stored in some kind of artificial memory of the control means 7.

The data provided by the flow counter may furthermore be used for checking the expiry status of the filtering means, i.e. for checking whether the filtering means are still suitable for use or should be replaced. Alternatively, or in addition, the expiry status of the filtering means may be based on time. That is, the device may also stop the supply of water to the device and/or issue a signal to the user if a predetermined period of time has lapsed since the filter has been introduced in the device.

As stated above, the device is preferably connected to the mains power grid for electricity supply. As shown in Fig. 1, the device also comprises an integrated rechargeable battery 8, which may serve as a back-up system providing electric power in case the mains power supply 9 is interrupted. When mains power supply is interrupted, the battery 8 powers the device until mains electricity is available again. When mains power is available, the battery 8 will be recharged, such that the battery is stand-by for the next period wherein the electricity supply may be is interrupted. The device further may comprise conventional components such as transformers for converting e.g. 12-volt battery power in 120-260 V AC when necessary.

The rechargable battery 8 can be connected to a power supply unit (not shown) that is to be connected to the mains power grid. Alternatively it can be connected to solar cells that are attached at the outside of the device.

The device according to the invention allows to reduce the overall power consumption. If the device is not in use for a certain period of time, the control means 7 may switch to an energy saving mode by for example switching off UV lamp off and thus minimizing overall power consumption. This will also improve the lifetime of the UV lamp.

In order to reduce the power consumption of the device, especially when using battery- or DC power supply, use can e.g. be made of so-called Pulse Width Modulation (PWM) to reduce the power supplied to the valve. With PWM the DC supply voltage is momentary switched on and off with a certain frequency. The percentage of the supply voltage being switched on compared to the total period of time of one pulse is called the Duty Cycle (D=Ton/Ton+Toff). Ton is the time that the supply voltage is connected to the valve and Toff therefore is the time that the supply voltage is disconnected from the valve. The switching frequency is defined as 1/(Ton+Toff). Choosing the Ton+Toff time far below the electrical time constant of the valve (L/R) will result in a valve that "sees" only the average DC voltage that is applied by the PWM circuit (Usupply * D). Lowering the average DC voltage supplied to the valve will result in reducing the total amount of power supplied to the valve.

## Claims

1. Household water purification device, comprising electrically driven water purification means (3), an inlet (2) for contaminated water, which inlet is in fluid communication with the water purification means and is connected to the public water supply system when the device is operational, an outlet (15) for dispensing purified water, which outlet is in fluid communication with the water purification means, water flowing from the inlet to the outlet via the water purification means in operational conditions, wherein said device further comprises a closing unit (5) for interrupting the flow of water, a sensor (6) that senses the availability of public water supply, and control means (7) that controls the closing unit and the water purification means, wherein the sensor (6) comprises a pressure for sensing the pressure of the water in the inlet (2), wherein the electrically driven purification means (3) are switched off by the control means (7) when the supply of water from the public water supply system is temporarily disturbed, wherein the water purification means are re-activated as soon as water is available as it is sensed by the sensor (6).

2. Device according to claim 1, further comprising monitoring means (10) for monitoring the quantity of water that has been purified.

3. Device according to claim 2, wherein the control means (7) operates the closing unit (5) if a preset amount of water has been purified.

4. Device according to claim 3, further comprising input means for setting a preset amount of water to be purified.

5. Device according to any of the claims 1-4, further comprising a rechargeable battery (8), which is electrically connected to a charging source.

6. Device according to any of the claims 1-5, wherein the electrically driven water purification means (3) comprise UV means for irradiating the water with UV radiation.

7. Device according to claim 6, further comprising filtration means (4) for filtering the water, upstream from and in fluid communication with said UV means.

## Patentansprüche

1. Haushalts-Wasserreinigungsvorrichtung mit elektrisch angetriebenen Wasserreinigungsmitteln (3), einem Einlass (2) für verschmutztes Wasser, der in flüssigkeitsleitender Verbindung mit den Wasserreinigungsmitteln steht und bei sich in Betrieb befindlicher Vorrichtung mit dem öffentlichen Wasserversorgungssystem verbunden ist, einem Auslass (15) zur Abgabe von gereinigtem Wasser, der in flüssigkeitsleitender Verbindung mit den Wasserreinigungsmitteln steht, wobei in Betriebszuständen Wasser von dem Einlass über die Wasserreinigungsmittel zu dem Auslass fließt, wobei die Vorrichtung weiterhin eine Schließeinheit (5) zur Unterbrechung des Wasserflusses, einen Sensor (6), der die Verfügbarkeit der öffentlichen Wasserversorgung ermittelt, sowie Steuermittel (7), welche die Schließeinheit und die Wasserreinigungsmittel steuern, umfasst, wobei der Sensor (6) einen Druckschalter umfasst, um den Druck des Wassers in dem Einlass (2) zu ermitteln, wobei die elektrisch angetriebenen Reinigungsmittel (3) durch die Steuermittel (7) abgeschaltet werden, sobald die Wasserzufuhr von dem öffentlichen Wasserversorgungssystem vorübergehend gestört ist, wobei die Wasserreinigungsmittel wieder aktiviert werden, sobald Wasser, wie von dem Sensor (6) ermittelt, verfügbar ist.

2. Vorrichtung nach Anspruch 1, welche weiterhin Überwachungsmittel (10) zur Überwachung der Menge des gereinigten Wassers umfasst.

3. Vorrichtung nach Anspruch 2, wobei die Steuermittel (7) die Schließeinheit (5) betätigen, wenn eine vorgegebene Menge Wasser gereinigt wurde.

4. Vorrichtung nach Anspruch 3, welche weiterhin Eingabemittel zur Einstellung einer zu reinigenden, vorgegebenen Menge Wasser umfasst.

5. Vorrichtung nach einem der Ansprüche 1-4, welche weiterhin eine wieder aufladbare Batterie (8) umfasst, die mit einer Ladequelle elektrisch verbunden ist.

6. Vorrichtung nach einem der Ansprüche 1-5, wobei die elektrisch angetriebenen Wasserreinigungsmittel (3) UV-Mittel zum Bestrahlen des Wassers mit UV-Strahlung umfassen.

7. Vorrichtung nach Anspruch 6, welche weiterhin Filtrationsmittel (4) umfasst, um das Wasser oberhalb der UV-Mittel und in flüssigkeitsleitender Verbindung mit diesen zu filtern.

## Revendications

1. Dispositif de purification d'eau de ménage, comprenant des moyens de purification d'eau à commande électrique (3), une entrée (2) pour de l'eau contaminée, laquelle entrée est en communication fluide avec les moyens de purification d'eau et est reliée au système d'alimentation publique en eau lorsque le dispositif est opérationnel, une sortie (15) pour distribuer de l'eau purifiée, laquelle sortie est en communication fluide avec les moyens de purification d'eau, de l'eau circulant à partir de l'entrée vers la sortie par le biais des moyens de purification d'eau dans des conditions opérationnelles, dans lequel ledit dispositif comprend encore une unité de fermeture (5) pour interrompre le flux d'eau, un détecteur (6) qui détecte la disponibilité de l'alimentation publique en eau et des moyens de commande (7) qui commandent l'unité de fermeture et les moyens de purification d'eau, dans lequel le détecteur (6) comprend une pression pour détecter la pression de l'eau dans l'entrée (2), dans lequel les moyens de purification à commande électrique (3) sont mis hors circuit par les moyens de commande (7) lorsque l'alimentation en eau en provenance du système d'alimentation publique en eau est perturbée temporairement, dans lequel les moyens de purification d'eau sont réactivés dès que de l'eau sera disponible au fur et à mesure qu'elle est détectée par le détecteur (6).

2. Dispositif selon la revendication 1, comprenant encore des moyens de contrôle (10) pour contrôler la quantité d'eau qui a été purifiée.

3. Dispositif selon la revendication 2, dans lequel les moyens de commande (7) font fonctionner l'unité de fermeture (5) si une quantité préréglée d'eau a été purifiée.

4. Dispositif selon la revendication 3, comprenant encore des moyens d'entrée pour régler une quantité préréglée d'eau à purifier.

5. Dispositif selon l'une quelconque des revendications précédentes 1 à 4, comprenant encore une batterie rechargeable (8) qui est connectée électriquement à une source de charge.

6. Dispositif selon l'une quelconque des revendications précédentes 1 à 5, dans lequel les moyens de purification d'eau à commande électrique (3) comprennent des moyens UV pour irradier l'eau avec du rayonnement UV.

7. Dispositif selon la revendication 6, comprenant encore des moyens de filtration (4) pour filtrer de l'eau, en amont de et en communication fluide avec lesdits moyens UV.
